(19) Europäisches Patentamt
European Patent Office
Office européen des brevets

(11) **EP 2 181 012 B1**

## (12) EUROPÄISCHE PATENTSCHRIFT

(45) Veröffentlichungstag und Bekanntmachung des Hinweises auf die Patenterteilung:
**29.06.2011 Patentblatt 2011/26**

(21) Anmeldenummer: **08774889.3**

(22) Anmeldetag: **08.07.2008**

(51) Int Cl.:
***B60K 35/00*** *(2006.01)*     ***B60K 37/06*** *(2006.01)*

(86) Internationale Anmeldenummer:
**PCT/EP2008/058845**

(87) Internationale Veröffentlichungsnummer:
**WO 2009/024401 (26.02.2009 Gazette 2009/09)**

(54) **VERFAHREN ZUM ANZEIGEN VON INFORMATIONEN IN EINEM KRAFTFAHRZEUG FÜR EINEN BEDIENZUSTAND UND EINEN ANZEIGEZUSTAND UND ANZEIGEEINRICHTUNG**

METHOD FOR DISPLAYING INFORMATION IN A MOTOR VEHICLE FOR AN OPERATING STATE AND A DISPLAY STATE, AND DISPLAY DEVICE

PROCEDE D'AFFICHAGE D'INFORMATIONS DANS UN VEHICULE A MOTEUR POUR UN ETAT DE COMMANDE ET UN ETAT D'AFFICHAGE ET DISPOSITIF D'AFFICHAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.08.2007 DE 102007039445**

(43) Veröffentlichungstag der Anmeldung:
**05.05.2010 Patentblatt 2010/18**

(73) Patentinhaber: **Volkswagen AG**
**38436 Wolfsburg (DE)**

(72) Erfinder:
• **DEHMANN, Rainer**
**10961 Berlin (DE)**

• **HOFMANN, Gustav**
**38114 Braunschweig (DE)**
• **KUHN, Mathias**
**14129 Berlin (DE)**
• **HAUSCHILD, Frank**
**10587 Berlin (DE)**
• **WAGNER, Volkmar**
**10965 Berlin (DE)**

(74) Vertreter: **Reitstötter - Kinzebach**
**Patentanwälte**
**Sternwartstrasse 4**
**81679 München (DE)**

(56) Entgegenhaltungen:
**EP-A- 1 406 160**     **WO-A-2006/108617**
**DE-A1- 10 015 726**     **US-A1- 2006 265 126**

**Beschreibung**

Die vorliegende Erfindung betrifft ein Verfahren zum Anzeigen von Informationen mittels eines in einem Kraftfahrzeug befestigten Displays, bei dem von einer Benutzerschnittstelleneinrichtung Graphikdaten erzeugt werden, die zumindest einen Teilbereich des Displays so ansteuern, dass in einem Bedienzustand Informationen dargestellt werden, die zumindest einem mittels einer Eingabeeinrichtung ausführbaren Bedienschritt zugeordnet sind, und in einem Anzeigezustand Informationen dargestellt werden, die keinen Bedienschritten zugeordnet sind. Ferner betrifft die Erfindung eine Anzeigeeinrichtung für ein Kraftfahrzeug mit einem in einem Kraftfahrzeug befestigten Display, einer Eingabeeinrichtung und einer Benutzerschnittstelleneinrichtung, mit welcher Graphikdaten erzeugbar sind, die zumindest einen Teilbereich des Displays so ansteuern, dass in einem Bedienzustand Informationen dargestellt werden, die einem mittels einer Eingabeeinrichtung ausführbaren Bedienschritt zugeordnet sind, und in einem Anzeigezustand Informationen dargestellt werden, die keinen Bedienschritten zugeordnet sind.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombünstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

In der DE 100 01 988 A1 ist beispielsweise ein Kombünstrument zur Anzeige von betriebs- und/oder verkehrsbezogenen Daten beschrieben. Um das vielfältige Informationsangebot besser aufnehmen zu können, wird in der DE 103 03 792 A1 eine perspektivische Darstellung dreidimensionaler Elemente vorgeschlagen.

Als weitere Anzeigeeinrichtung besitzt ein Fahrzeug häufig eine Multifunktionsanzeige in der Mittelkonsole oder oberhalb der Mittelkonsole. Ein solches Multifunktionsbedienelement ist beispielsweise in der DE 199 41 955 A1 beschrieben.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Werden solche Menüstrukturen in einem Kraftfahrzeug eingesetzt, ergibt sich das Problem, dass die Navigation innerhalb dieser Menüstrukturen und die Aufnahme der von dem Display angezeigten Informationen die Aufmerksamkeit des Fahrers derart beanspruchen, dass das gleichzeitige sichere Führen des Kraftfahrzeugs durch den Fahrer nicht mehr möglich ist. Will somit der Fahrer Einrichtungen des Fahrzeugs, deren Informationen über die Anzeigeeinrichtung dargestellt werden, bedienen, sollte er dies vor dem Beginn einer Fahrt tun oder die Fahrt für die Bedienung unterbrechen. Derartige Beeinträchtigungen für die Bedienung sind jedoch unerwünscht. Sie führen vielfach dazu, dass der Fahrer die Einrichtungen des Fahrzeugs während der Fahrt bedient, obwohl dies zu einer Ablenkung führt, die ein Sicherheitsrisiko darstellen kann.

Es ist daher wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann, selbst wenn von der Anzeigeeinrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Des Weiteren werden bei bekannten Anzeigeverfahren für Displays in einem Kraftfahrzeug die Informationen, die den Bedienzustand betreffen, nicht klar von den Informationen, die den Anzeigezustand betreffen, getrennt. Es werden vielfach innerhalb der von einer Anwendung angezeigten Informationen, die nicht unmittelbar mit dem Ausführen von Bedienschritten in Zusammenhang stehen, Schaltflächen angezeigt, welche eine Bedienung der jeweiligen Anwendung ermöglichen. Dies führt dazu, dass Teile der Fläche des Displays nicht für die Informationen des Anzeigezustands zur Verfügung stehen, so dass diese Anzeigeinformationen nur auf einer kleineren Fläche wiedergegeben werden können. Dies ist insbesondere bei der Verwendung des Displays in einem Kraftfahrzeug nachteilig, da das Display aus Platz- und Kostengründen nicht ohne weiteres vergrößert werden kann, so dass im Ergebnis weniger Fläche auf dem Display für die Anzeigeinformationen zur Verfügung steht. Hierdurch wird die Erfassbarkeit der Anzeigeinformationen verschlechtert. Dies führt dazu, dass insbesondere der Fahrer das Display länger betrachten muss, was die Sicherheit beim Führen des Fahrzeugs beeinträchtigt.

In der EP 1 406 160 A2, welche die Merkmale der Obergriffs der Ansprüche 1 und 16 beinhaltet, ist eine Anzeigevorrichtung mit einer Anzeigefläche, einem Multifunktionsschalter und einem Infrarotsensor beschrieben, welcher die Annäherung der Hand des Nutzers an den Multifunktionsschalter detektiert. Des Weiteren umfasst die Vorrichtung eine Steuerung der Anzeige auf der Anzeigefläche, die so ausgebildet ist, dass ein Hauptmenü auf der Anzeigefläche angezeigt wird, wenn der Infrarotsensor detektiert, dass sich eine Betätigungshand in der Umgebung des Multifunktionsschalters befindet. Wenn der Infrarotsensor detektiert, dass die Betätigungshand von dem Multifunktionsschalter entfernt wurde, wird auf der Anzeigefläche nach Ablauf eines Zeitintervalls eine Anzeige wiedergegeben, die nicht das Hauptmenü enthält.

In der US 2006/0265126 A1 ist eine Anzeigevorrichtung für Fahrzeuge beschrieben, die eine Anzeigefläche und eine Nutzerschnittstelle umfasst, die auf der Anzeigefläche gleichzeitig zumindest zwei Anzeigeelemente darstellt, welche Informationen wiedergeben, die zu verschiedenen Untersystemen des Fahrzeugs gehören. Wenn sich beispielsweise die Hand eines Nutzers einem Bedienelement nähert, wird dies von einem Annäherungssensor detektiert, woraufhin die Nutzerschnittstelle ein Fenster hervorgehoben darstellt, das durch das Bedienelement betätigt werden soll.

Es ist die Aufgabe der vorliegenden Erfindung ein Verfahren und eine Anzeigeeinrichtung der eingangs genannten Art bereitzustellen, die sich einfach, schnell und intuitiv bedienen lässt, wobei die Anzahl der auszuführenden Bedienschritte nach Möglichkeit verringert wird.

Erfindungsgemäß wird diese Aufgabe durch ein Verfahren mit den Merkmalen des Anspruchs 1 und einer Anzeigeeinrichtung mit dem Merkmal des Anspruchs 16 gelöst. Vorteilhafte Aus- und Weiterbildungen ergeben sich aus den Unteransprüchen.

Bei dem erfindungsgemäßen Verfahren wird eine Annäherung eines Objekts an die Eingabeeinrichtung detektiert und bei einer Annäherung eines Objekts an die Eingabeeinrichtung wechselt die Benutzerschnittstelleneinrichtung von dem Anzeigezustand in den Bedienzustand, wobei der Bedienzustand die Bedienung einer Anwendung betrifft, deren Anzeige im Anzeigezustand dargestellt wurde. Auf diese Weise kann der Nutzer ohne weiteres eine logische Verbindung zwischen den möglichen Bedienschritten, die im Bedienzustand visualisiert werden, zu der Anwendung des Anzeigezustands herstellen.

In dem Anzeigezustand werden Informationen dargestellt, die keinen Bedienschritten zugeordnet sind. Dies bedeutet, dass die Informationen keine Visualisierungen von möglichen Bedienschritten der Anwendung enthält, deren Informationen auf dem Display dargestellt werden. Dabei können die Informationen des Anzeigezustands das Display vollständig einnehmen. Ferner ist es möglich, dass diese Informationen nur einen Teilbereich des Displays einnehmen. Beispielsweise können bestimmte, sehr grundlegende Schaltflächen weiterhin in einem gesonderten Bereich des Displays angezeigt werden, die es dem Benutzer ermöglichen, jederzeit ohne weiterer Überlegungen oder Kenntnisse in bestimmte Basiszustände zu gelangen. Im Bedienzustand werden hingegen Informationen dargestellt, die zumindest einem mittels der Eingabeeinrichtung ausführbaren Bedienschritt zugeordnet sind. Im Bedienzustand können gegebenenfalls weiterhin Informationen des Anzeigezustands dargestellt werden, denen jedoch aufgrund der Darstellung der Informationen für den Bedienzustand weniger Fläche auf dem Display zur Verfügung steht.

Der Bedienzustand und der Anzeigezustand sind bei dem erfindungsgemäßen Verfahren klar voneinander getrennt. Es ist insbesondere möglich, im Anzeigezustand keinerlei Informationen darzustellen, die mit der Bedienung der laufenden Anwendung in Zusammenhang stehen. Will der Benutzer einen Bedienschritt ausführen, braucht er sich nur mit einem Objekt, wie z. B. seiner Hand oder einem Finger, der Eingabeeinrichtung nähern. Dies ist eine für den Benutzer intuitive Vorgehensweise, so dass sie zumeist auch vom Fahrer ausgeführt werden kann, ohne den Blick vom Fahrgeschehen abzuwenden. Wird eine solche Annäherung an die Eingabeeinrichtung detektiert, wechselt die Benutzerschnittstelleneinrichtung automatisch von dem Anzeigezustand in den Bedienzustand. Der Benutzer wird somit erst nach der Annäherung z. B. seine Hand an die Eingabeeinrichtung seinen Blick kurzzeitig auf das Display richten. Er nimmt dann bereits die Informationen des Bedienzustands wahr und kann auf diese Weise sehr schnell den gewünschten Bedienschritt ausführen. Danach kann die Benutzerschnittstelleneinrichtung wieder von dem Bedienzustand in den Anzeigezustand wechseln, so dass der Benutzer die für ihn wesentlichen Informationen der Anzeige der Anwendung, die nicht mit einem Bedienschritt in Verbindung stehen, auf einer großen Fläche des Displays wahrnehmen kann. Will der Nutzer nämlich keinen Bedienschritt ausführen, sind Informationen, welche etwaige Bedienschritte visualisieren, überflüssig. Sie werden bei dem erfindungsgemäßen Verfahren nicht angezeigt.

Bei dem erfindungsgemäßen Verfahren werden somit insbesondere im Bedienzustand Schaltflächen dargestellt, die einem mittels der Eingabeeinrichtung ausführbaren Bedienschritt zugeordnet sind. Im Anzeigezustand werden hingegen keine solche Schaltflächen dargestellt. Dies betrifft zumindest den Teilbereich des Displays, der von dem erfindungsgemäßen Verfahren angesteuert wird.

Gemäß einer Ausgestaltung des erfindungsgemäßen Verfahrens umfassen die Informationen im Bedienzustand auswählbare Listeneinträge. Diese Listeneinträge können beispielsweise hinsichtlich ihrer graphischen Darstellung zweidimensional dargestellt werden. Nach der Auswahl eines Listeneintrags werden die Informationen im Anzeigezustand dreidimensional dargestellt. Unter dreidimensional wird in diesem Zusammenhang verstanden, dass die Informationen auf einem zweidimensionalen Display graphisch dreidimensional visualisiert werden. Die dreidimensionale Darstellung kann beispielsweise eine perspektivische Darstellung sein. Die Informationen werden im Anzeigezustand, insbesondere auf den Flächen eines dreidimensional dargestellten geometrischen Körpers dargestellt. Dabei wird z. B. im Anzeigezustand der ausgewählte Listeneintrag auf der Stirnfläche des geometrischen Körpers und die übrigen Listeneinträge auf einer Seitenfläche des geometrischen Körpers dargestellt.

Gemäß einer Ausgestaltung des erfindungsgemäßen Verfahrens wird die Annäherung des Objekts kapazitiv gemessen. Gemäß einer anderen Ausgestaltung wird die Annäherung des Objekts resistiv gemessen. Ferner kann die Annäherung des Objekts mittels Infrarotstrahlung gemessen werden. Bei dem Objekt handelt es sich insbesondere um einen Körperteil eines Nutzers, insbesondere seine Hand oder ein Finger des Nutzers.

Gemäß einer Weiterbildung des erfindungsgemäßen Verfahrens ist der Bedienzustand in einem ersten Bedienzustand und einem zweiten Bedienzustand unterteilt. Bei der Annäherung eines Objekts an die Eingabeeinrichtung wechselt die Benutzerschnittstelleneinrichtung von dem Anzeigezustand in den ersten Bedienzustand. Im ersten Bedienzustand werden insbesondere Informationen dargestellt, die Bedienschritten zugeordnet sind, welche die Bedienung der laufenden Anwendung betreffen, deren Anzeige im vorherigen Anzeigezustand dargestellt wurde. Werden beispielsweise auf dem Display Informationen des Navigationssystems des Fahrzeugs visualisiert, werden im ersten Bedienzustand z. B. Informationen visualisiert, welche die Zieleingabe für das Navigationssystem betreffen. Werden auf dem Display Informationen einer Audioeinrichtung visualisiert, können im ersten Bedienzustand Schaltflächen visualisiert werden, welche die Lautstärke und die Auswahl der Audioquelle betreffen. Die Bedienschritte, welche den Informationen zugeordnet sind, die im ersten Bedienzustand dargestellt werden, werden vom Benutzer besonders häufig während einer laufenden Anwendung benötigt. Sie können bei dem erfindungsgemäßen Verfahren besonders schnell und intuitiv vorgenommen werden, da sie unmittelbar nach der Annäherung des dem Nutzer zugeordneten Objekts an die Eingabeeinrichtung dargestellt werden.

Im zweiten Bedienzustand werden insbesondere Informationen dargestellt, die Basiseinstellungen, d. h. z. B. das sogenannte Setup-Menü, betreffen, welche die laufende Anwendung betreffen, deren Anzeige im vorherigen Anzeigezustand hergestellt wurde. Gemäß einer bevorzugten Ausgestaltung des erfindungsgemäßen Verfahrens werden von der Benutzerschnittstelleneinrichtung Graphikdaten erzeugt, die das Display so ansteuern, dass Informationen des Anzeigezustands auf einem Anzeigefeld auf einer Seite eines flächigen graphischen Objekts und die Informationen des zweiten Bedienzustands auf einem Bedienfeld auf der anderen Seite des flächigen graphischen Objekts dargestellt werden. Bevorzugt werden auch die Informationen des ersten Bedienzustands auf der Seite des flächigen graphischen Objekts dargestellt, auf welcher die Informationen des Anzeigezustands dargestellt werden. Auf eine Eingabe mittels der Eingabeeinrichtung verändert eine Recheneinheit der Benutzerschnittstelleneinrichtung die Graphikdaten derart, dass sich das flächige graphische Objekt bei der perspektivischen Darstellung auf dem Display von einer Seite zu der anderen Seite dreht. Bei dem graphischen Objekt kann es sich somit insbesondere um die graphische Darstellung einer Fläche mit einer Vorder- und einer Rückseite handeln. Die Drehung dieses graphischen Objekts wird perspektivisch wiedergegeben.

Gemäß einer bevorzugten Ausgestaltung des erfindungsgemäßen Verfahrens erzeugt die Recheneinheit der Benutzerschnittstelleneinrichtung Grafikdaten für aufeinander folgende Zwischenbilder zur Darstellung der Drehung, wobei die Drehung in eine erste Phase, bei der Bildpunkte des grafischen Objekts beschleunigt bewegt werden, und eine zweite Phase, bei der Bildpunkte des grafischen Objekts abgebremst bewegt werden, unterteilt wird. Dabei entspricht die erste Phase z. B. einem Drehwinkel des grafischen Objekts von 0° bis 90° und die zweite Phase einem Drehwinkel des grafischen Objekts von 90° bis 180°. Die Achse der Drehung liegt insbesondere innerhalb des grafischen Objekts. Bevorzugt ist die Achse in Richtung der Höhe des Displays ausgerichtet. Ferner ist die Achse bevorzugt mittig in dem grafischen Objekt angeordnet.

Unter einer beschleunigten Bewegung wird hier eine positive Beschleunigung verstanden, bei der sich die Geschwindigkeit erhöht, und unter einer abgebremsten Bewegung wird eine negative Beschleunigung verstanden, bei der sich die Geschwindigkeit erniedrigt.

Bei dem erfindungsgemäßen Verfahren ist die Art und Weise, wie die Objekte gedreht werden, von besonderer Bedeutung. Von der Darstellung dieser Drehung hängt es nämlich ab, wie gut und wie schnell sich der Betrachter in den Objekten orientieren kann, auch wenn sie gedreht worden sind. Dabei hat sich herausgestellt, dass viele Animationstechniken, die außerhalb des Kraftfahrzeugs bei der veränderlichen grafischen Darstellung von Objekten eingesetzt werden, für die Verwendung im Kraftfahrzeug ungeeignet sind, da im Kraftfahrzeug der Betrachter das Display nur für kurze Augenblicke betrachtet. Der zeitliche Verlauf der Veränderung einer Position eines grafisch dargestellten Objekts ist daher auch für die Sicherheit beim Führen des Fahrzeugs von besonderer Bedeutung.

Gemäß einer bevorzugten Weiterbildung des erfindungsgemäßen Verfahrens werden bei der Berechnung der Grafikdaten für aufeinander folgende Zwischenbilder zur Darstellung der Drehung die aufeinander folgenden Positionen x der Bildpunkte des grafischen Objekts in der ersten Phase folgende Rechenschritte durchgeführt:

(i) $$n = \frac{t - t_0}{d_1} \quad ;$$

(ii) $$x = b_1 + c_1 \cdot n^4 \quad ,$$

wobei

t eine Systemzeit ist, zu der die erzeugten Grafikdaten auf dem Display dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts ist,
$C_1$ die gesamte Verschiebung des Bildpunkts des grafischen Objekts in der ersten Phase ist und wobei die Schritte (i) und (ii) so oft wiederholt werden, bis gilt, dass: $t > (t_0 + d_1)$.

Des Weiteren werden bei der Berechnung der Grafikdaten für aufeinander folgende Zwischenbilder zur Darstellung der Drehung, die aufeinander folgenden Positionen x der Bildpunkte des Objekts, in der zweiten Phase folgende Rechenschritte durchgeführt:

(i) $$n = \frac{t - t_0}{d_1} - 1 \quad ;$$

(ii) $$x = b_2 + c_2 \cdot (1 - n^4) \quad ,$$

wobei

t eine Systemzeit ist, zu der die erzeugten Grafikdaten auf dem Display dargestellt werden, wobei zu Beginn der Drehung der zweiten Phase $t = t_0$ ist,
$d_2$ die Dauer der zweiten Phase ist,
$b_2$ die Ausgangsposition des Bildpunkts des Objekts ist,
$C_2$ die Gesamtverschiebung des Bildpunkts des Objekts in der zweiten Phase ist und
wobei die Schritte (i) und (ii) von der Recheneinheit so oft wiederholt werden, bis gilt: $t > (t_0 + d_2)$.

Des Weiteren ist die Dauer der Gesamtdrehung von besonderer Bedeutung für Erfassbarkeit der dargestellten Information. Bei dem erfindungsgemäßen Verfahren ist die Dauer der Gesamtdrehung in einem Bereich von 0,5 Sekunden bis 2 Sekunden, bevorzugt in einem Bereich von 1 Sekunde bis 1,5 Sekunden. Die Dauer der Drehung der ersten Phase ist insbesondere in einem Bereich von 0,25 Sekunden bis 1 Sekunde und bevorzugt in einem Bereich von 0,5 Sekunden bis 0,75 Sekunden. Ferner ist die Dauer der Drehung der zweiten Phase in einem Bereich von 0,25 Sekunden bis 1 Sekunde, bevorzugt in einem Bereich von 0,5 Sekunden bis 0,75 Sekunden. Es ist ferner bevorzugt, dass die Dauer der Drehung der ersten Phase der Dauer der Drehung der zweiten Phase entspricht.

Gemäß einer bevorzugten Weiterbildung des erfindungsgemäßen Verfahrens wird die Geschwindigkeit des Kraftfahrzeugs gemessen und die Dauer der Gesamtdrehung bzw. die Dauer der Drehung der ersten und/oder zweiten Phase in Abhängigkeit von der Geschwindigkeit des Kraftfahrzeugs ermittelt. Bevorzugt ist die Dauer der Drehung umso länger, je höher die Geschwindigkeit des Kraftfahrzeugs ist. Bei höheren Geschwindigkeiten kann der Fahrer nämlich seinen Blick nur für kürzere Zeitintervalle auf das Display richten. Ferner ist der Abstand der Zeitintervalle, in denen der Fahrer seinen Blick auf das Display richtet, größer, da der Fahrer bei höheren Geschwindigkeiten seine Aufmerksamkeit stärker auf das Fahrgeschehen richten muss. Die Koppelung der Drehdauer des flächigen Objekts an die Geschwindigkeit des Kraftfahrzeugs stellt somit sicher, das der Fahrer bei höheren Geschwindigkeiten die Orientierung in der Informationsdarstellung behält und die Informationsinhalte auf diese Weise einfach, schnell und intuitiv erfassen kann.

Gemäß einer bevorzugten Ausgestaltung des erfindungsgemäßen Verfahrens erfolgt die Eingabe, um in den zweiten Bedienzustand zu gelangen, durch eine Berührung des Displays. Gemäß einer anderen Ausgestaltung erfolgt die Eingabe durch eine Geste eines Körperteils eines Nutzers, welche vor dem Display ausgeführt wird. Die Geste wird von der Eingabeeinrichtung oder einer anderen nachgeschalteten Einrichtung erfasst und ausgewertet. Die Geste des Körperteils des Nutzers kann beispielsweise durch eine kapazitive Koppelung zwischen dem Körperteil und einer Empfangseinrichtung erfasst werden. Ferner kann die Geste des Körperteils des Nutzers durch eine Emission von Infrarotstrahlung und eine Reflektion dieser Infrarotstrahlung an dem Körperteil des Nutzers erfasst werden.

Die erfindungsgemäße Anzeigerichtung umfasst einen Annäherungssensor, mit dem eine Annäherung eines Objekts an die Eingabeeinrichtung detektierbar ist. Die Benutzerschnittstelleneinrichtung ist so ausgebildet, dass bei einer Annäherung eines Objekts an die Eingabeeinrichtung die Graphikdaten von dem Anzeigezustand in den Bedienzustand wechseln, wobei der Bedienzustand die Bedienung einer Anwendung betrifft, deren Anzeige im Anzeigezustand dargestellt wurde.

Der Annäherungssensor misst die Annäherung des Objekts insbesondere kapazitiv. Ferner kann der Annäherungssensor die Annäherung des Objekts resistiv messen. Schließlich kann der Annäherungssensor die Annäherung des Objekts mittels Infrarotstrahlung messen.

Gemäß einer bevorzugten Ausgestaltung der erfindungsgemäßen Anzeigeeinrichtung ist der Bedienzustand in einen ersten Bedienzustand und einen zweiten Bedienzustand unterteilt, wobei bei der Annäherung eines Objekts an die Eingabeeinrichtung die Benutzerschnittstelleneinrichtung von dem Anzeigezustand in den ersten Bedienzustand wechselt. Die von der Benutzerschnittstelleneinrichtung erzeugbaren Graphikdaten steuern das Display insbesondere so an, dass Informationen des Anzeigezustands auf einem Anzeigefeld auf einer Seite eines flächigen graphischen Objekts und die Informationen des zweiten Bedienzustands auf einem Bedienfeld auf der anderen Seite des flächigen graphischen Objekts dargestellt sind. Die Benutzerschnittstelleneinrichtung umfasst gemäß einer bevorzugten Ausgestaltung eine Recheneinheit, mit welcher in Abhängigkeit von einer Eingabe mittels der Eingabeeinrichtung die Graphikdaten so veränderbar sind, dass sich das flächige graphische Objekt bei der perspektivischen Darstellung auf dem Display von einer Seite zu der anderen Seite dreht. Die Animation dieser Drehung erfolgt wie vorstehend in Bezug auf das erfindungsgemäße Verfahren beschrieben.

Bei der Eingabeeinrichtung kann es sich um eine berührungsempfindliche Oberfläche eines Displays handeln. Bevorzugt ist die Eingabeeinrichtung eine Einrichtung zum Erfassen und Auswerten einer Geste eines Körperteils eines Nutzers, welche vor dem Display ausgeführt wird. Hierfür kann die Eingabeeinrichtung insbesondere eine Empfangseinrichtung umfassen, an die ein Signal von dem Körperteil des Nutzers kapazitiv übertragbar ist, wenn sich der Körperteil in der Nähe der Empfangseinrichtung befindet. Mittels dieser kapazitiven Koppelung kann die Position des Körperteils detektiert werden. Aus der zeitlichen Veränderung dieser Position kann auf eine Geste des Nutzers geschlossen werden.

Ferner kann gemäß einer anderen Ausgestaltung die Eingabeeinrichtung eine Infrarotlichtquelle oder einen Empfänger für reflektiertes Infrarotlicht zum Erfassen der Geste des Körperteils des Nutzers umfassen. Auch in diesem Fall wird die Position des Körperteils und deren zeitliche Veränderung erfasst und als Geste interpretiert.

Die Eingabeeinrichtung kann beispielsweise abgesetzt von dem Display angeordnet sein.

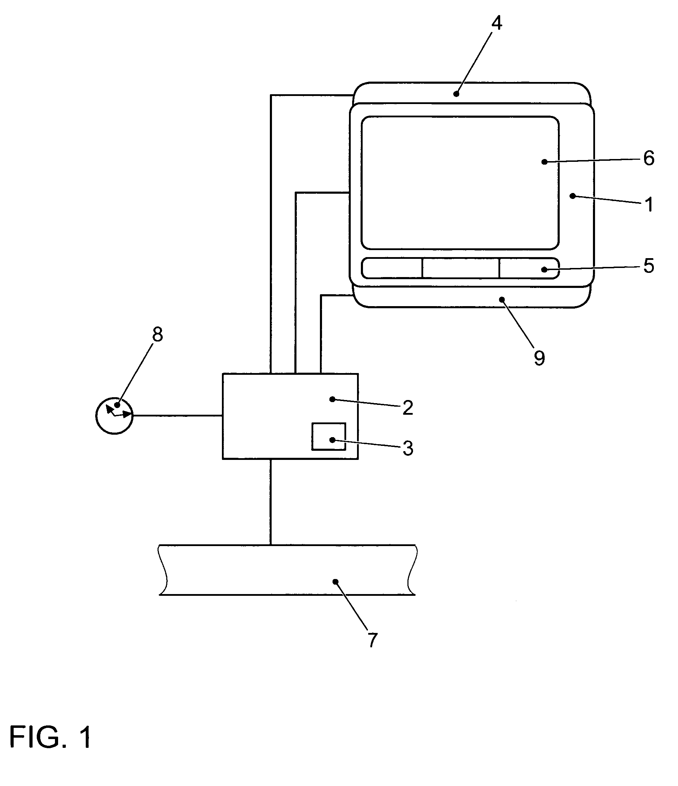

Figur 1    zeigt schematisch ein Ausführungsbeispiel der erfindungsgemäßen An- zeigeeinrichtung und die Koppelung dieser Anzeigeeinrichtung mit der Elektronik des Kraftfahrzeugs,

Figur 2    zeigt ein erstes Beispiel einer von dem erfindungsgemäßen Verfahren erzeugten Informationsanzeige des Anzeigezustands in einem Kraftfahr- zeug,

Figur 3    zeigt ein erstes Beispiel einer von dem erfindungsgemäßen Verfahren erzeugten Informationsanzeige des im ersten Bedienzustands in einem Kraftfahrzeug,

Figur 4    zeigt ein erstes Beispiel einer von dem erfindungsgemäßen Verfahren erzeugten Informationsanzeige des im zweiten Bedienzustands in einem Kraftfahrzeug.

Figur 5    zeigt ein zweites Beispiel einer von dem erfindungsgemäßen Verfahren erzeugten Informationsanzeige des Anzeigezustands in einem Kraftfahr- zeug,

Figur 6    zeigt ein zweites Beispiel einer von dem erfindungsgemäßen Verfahren erzeugten Informationsanzeige des im ersten Bedienzustands in einem Kraftfahrzeug,

Figur 7    zeigt ein zweites Beispiel einer von dem erfindungsgemäßen Verfahren erzeugten Informationsanzeige des im zweiten Bedienzustands in einem Kraftfahrzeug,

Figur 8    zeigt ein drittes Beispiel einer von dem erfindungsgemäßen Verfahren erzeugten Informationsanzeige des Anzeigezustands in einem Kraftfahr- zeug,

Figur 9    zeigt ein drittes Beispiel einer von dem erfindungsgemäßen Verfahren erzeugten Informationsanzeige des im ersten Bedienzustands in einem Kraftfahrzeug,

Figur 10    zeigt ein drittes Beispiel einer von dem erfindungsgemäßen Verfahren erzeugten Informationsanzeige des im zweiten Bedienzustands in einem Kraftfahrzeug.

Die Anzeigeeinrichtung umfasst ein Display 1 zur grafischen Darstellung von Informationen. Bei dem Display 1 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 1 ist eine (nicht gezeigte) Hintergrundbeleuchtung zugeordnet, die durch eine oder mehrere lichtemittierende Dioden bereitgestellt werden kann. Das Display 1 ist frei programmierbar, d. h. es lassen sich beliebige Grafikdaten erzeugen, welche auf dem Display 1 dargestellt werden.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Benutzerschnittstelleneinrichtung 2 verbunden, mit welcher Grafikdaten für auf dem Display 1 darstellbare grafische Objekte erzeugbar sind. Ferner ist die Benutzerschnittstelleneinrichtung 2 mit einer Eingabeeinrichtung 4 verbunden, über welche der Benutzer Einrichtungen des Fahrzeugs, deren Informationen auf dem Display 1 angezeigt werden, steuern kann.

Bei der Eingabeeinrichtung 4 kann es sich beispielsweise um eine Einrichtung zum Erfassen und. Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Kraftfahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 erkannt und die Annäherung wird als Bedienabsicht interpretiert. Dies führt dazu, dass das Display 1 vom Anzeigezustand in einen Bedienzustand wechselt, wie es später erläutert wird. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektiert Infrarotlicht detektieren. Details einer solchen Eingabeeinrichtung sind in der DE 100 58 244 C2 beschrieben, deren diesbezüglicher Offenbarungsgehalt hiermit in die vorliegende Beschreibung aufgenommen wird. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten grafischen Objekt zugeordnet werden. Des Weiteren können Gleitbewegungen des Fingers über die Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Schließlich kann als Eingabeeinrichtungen ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display angezeigte Objekte ansteuerbar und durch Drücken des Drehschalters auswählbar sind. Ferner kann durch den Drehschalter auch direkt ein Drehwinkel eingegeben werden, wie es später erläutert wird. Zusätzlich können um den Drehschalter herum separate Druckschalter angeordnet sein, wobei die Anordnung von Anzeigefeldern auf dem Display, die den Druckschaltern zugeordnet sind, zumindest schematisch der Anordnung der Druckschalter entspricht. Das erfindungsgemäße Informationssystem kann beispielsweise eine Multifunktionsbedienvorrichtung umfassen, wie sie in der EP 1 212 208 B1 beschrieben ist.

Die Benutzerschnittstelleneinrichtung 2 ist ferner mit einer Systemuhr 8 und mit einem Fahrzeugbus 7 gekoppelt. Über den Fahrzeugbus 7 ist die Benutzerschnittstelleneinrichtung 2 mit Fahrerassistenzsystemen des Fahrzeugs verbunden. Die Benutzerschnittstelleneinrichtung 2 erhält über den Fahrzeugbus 7 Daten dieser Fahrerassistenzsysteme und bereitet die so auf, dass diese Daten dem Fahrer bzw. den Fahrzeuginsassen über das Display 1 grafisch dargestellt werden. Die Benutzerschnittstelleneinrichtung 2 erzeugt hierfür Grafikdaten für auf dem Display 1 darstellbare Objekte, welche unter anderem die Informationen der Fahrerassistenzsysteme grafisch darstellen. Ferner ist die Benutzerschnittstelleneinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Benutzerschnittstelleneinrichtung 2 aufbereitet und in Grafikdaten für eine grafische Darstellung umgewandelt. Für Animationen der grafischen Darstellung auf dem Display umfasst die Benutzerschnittstelleneinrichtung eine Recheneinheit 3, welche beim Erzeugen von Zwischenbildern auf die Systemuhr 8 zurückgreift.

Wird die Annäherung eines Objekts nicht von der Eingabeeinrichtung 4 selbst detektiert, ist ein separater Annäherungssensor 9 vorgesehen, mit dem eine Annäherung eines Objekts an die Eingabeeinrichtung 4 detektiert wird. Der Annäherungssensor 9 ist mit der Benutzerschnittstelleneinrichtung 2 verbunden. Der Annäherungssensor 9 überträgt an die Benutzerschnittstelleneinrichtung 2 ein Signal, wenn sich ein Objekt soweit an die Eingabeeinrichtung 2 angenähert hat, dass ein voreingestellter Schwellwert unterschritten wird.

Im Folgenden wird ein Ausführungsbeispiel des erfindungsgemäßen Verfahrens erläutert, welches das Display 1 der vorstehend beschriebenen Anzeigeeinrichtung steuert.

Das Verfahren steuert den Teilbereich 6 des Displays 1 an. In einem Bereich 5 können Anzeigeinhalte einschließlich Schaltflächen angezeigt werden, die von dem Verfahren unabhängig sind. Gemäß einem anderen Ausführungsbeispiel wird das gesamte Display von dem erfindungsgemäßen Verfahrens angesteuert. In diesem Fall werden im Anzeigezustand überhaupt keine Schaltflächen oder andere mit der Bedienung in Verbindung stehende Informationen angezeigt.

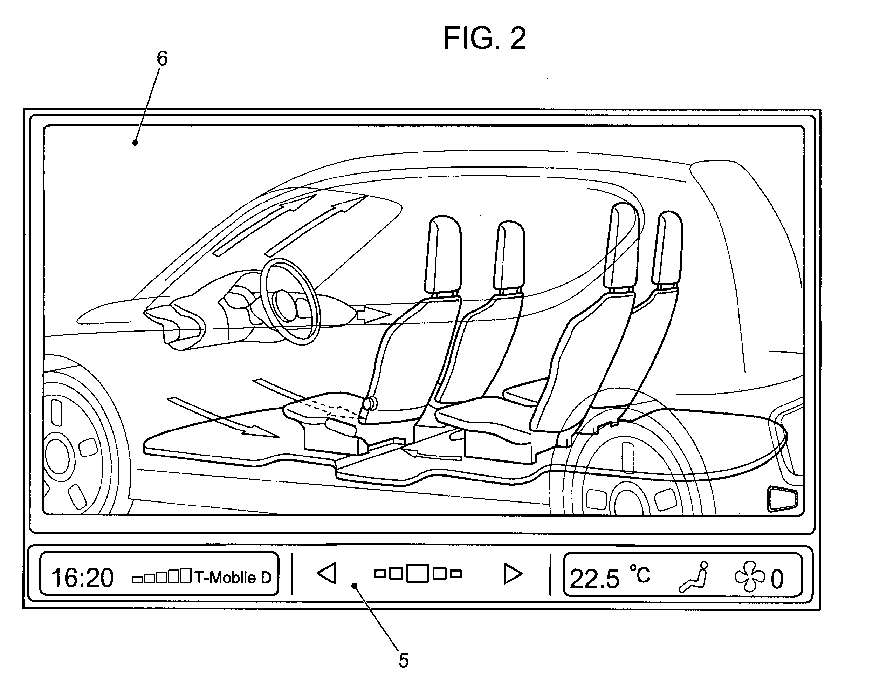

In Figur 2 ist eine Ansicht des Displays 1 gezeigt, bei welcher Informationen des Anzeigezustands der Klimaanlage des Kraftfahrzeugs dargestellt sind. Die im Anzeigezustand in dem Teilbereich 6 dargestellten Informationen betreffen nur der Visualisierung des Betriebs der Klimaanlage und ggf. die aktuellen Messwerte von Sensoren der Klimaanlage. Es werden in dem Teilbereich 6 im Anzeigezustand insbesondere keine Informationen dargestellt, die Bedienschritten zugeordnet sind.

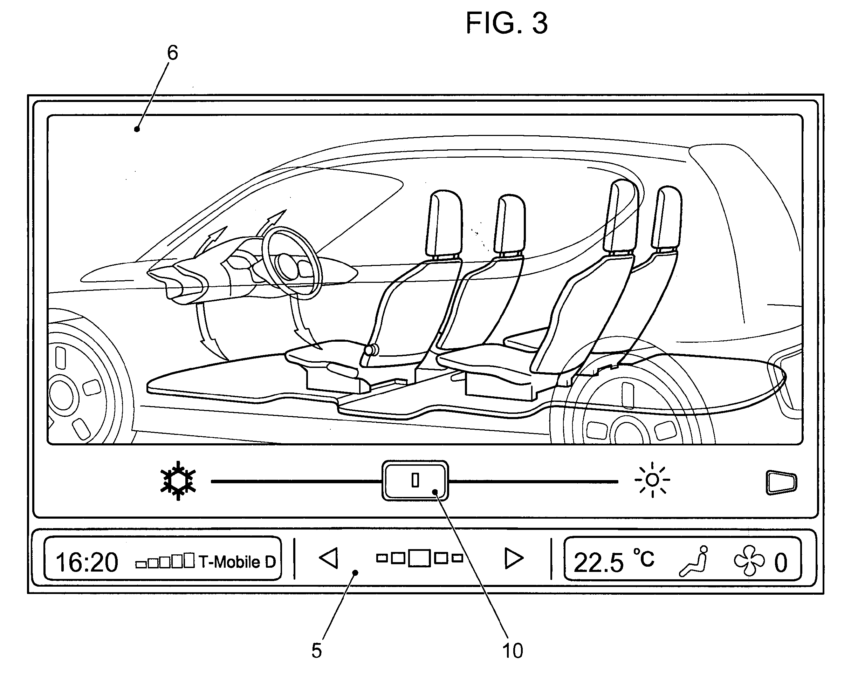

Nähert sich der Nutzer nun mit einem Objekt, wie z. B. seinem Finger, der Eingabeeinrichtung 2 an, wird dies von dem Annäherungssensor 9 detektiert. Handelt es sich bei der Eingabeeinrichtung 4 um eine berührungsempfindliche Oberfläche des Displays 1, wird von dem Annäherungssensor 9 eine Annäherung an das Display 1 detektiert. Handelt es sich bei der Eingabeeinrichtung 4 um ein abgesetztes Bedienelement, wie z. B. einen Dreh-Drückgeber, wird durch den Annäherungssensor 9 die Annäherung an diesen Dreh-Drückgeber detektiert. Ein entsprechendes Signal wird von dem Annäherungssensor 9 an die Benutzerschnittstelleneinrichtung 2 übertragen, welche daraufhin von dem in Figur 2 gezeigten Anzeigezustand in den in Figur 3 gezeigten ersten Bedienzustand wechselt.

In dem in Figur 3 gezeigten ersten Bedienzustand werden auf dem Display 1 Informationen dargestellt, welche mittels der Eingabeeinrichtung 4 ausführbaren Bedienschritten zugeordnet sind. Es wird insbesondere eine Schaltflächen 10 dargestellt, die einem bestimmten Bedienschritt entspricht. Diese Schaltfläche 10 kann über die Eingabeeinrichtung 4 betätigt werden. Handelt es sich bei der Eingabeeinrichtung 4 um eine berührungsempfindliche Oberfläche des festen Displays 1 kann der Benutzer durch Berührung der Schaltfläche 10 den Bedienschritt, der auf den Schaltfläche 10 visualisiert ist, ausführen. Handelt es sich bei der Eingabeeinrichtung 4 über ein abgesetztes Bedienelement, kann der Nutzer beispielsweise eine Markierung auf dem Display 1 bewegen und auf diese Weise die Schaltflächen 10 betätigen.

Die Schaltfläche 10 oder weitere Schaltflächen, die in dem ersten Bedienzustand angezeigt werden, betreffen insbesondere Bedienschritte, welche besonders häufig von dem Nutzer bei der Steuerung der Klimaanlage ausgeführt werden. Sie betreffen z. B. die Steuerung der Auslassöffnungen der Klimaanlage, die Stärke der Luftzufuhr in den Innenraum des Kraftfahrzeugs und die Temperatureinstellungen. In dem ersten Bedienzustand können weiterhin Teile der Informationen dargestellt werden, die auch im Anzeigezustand wiedergegeben werden.

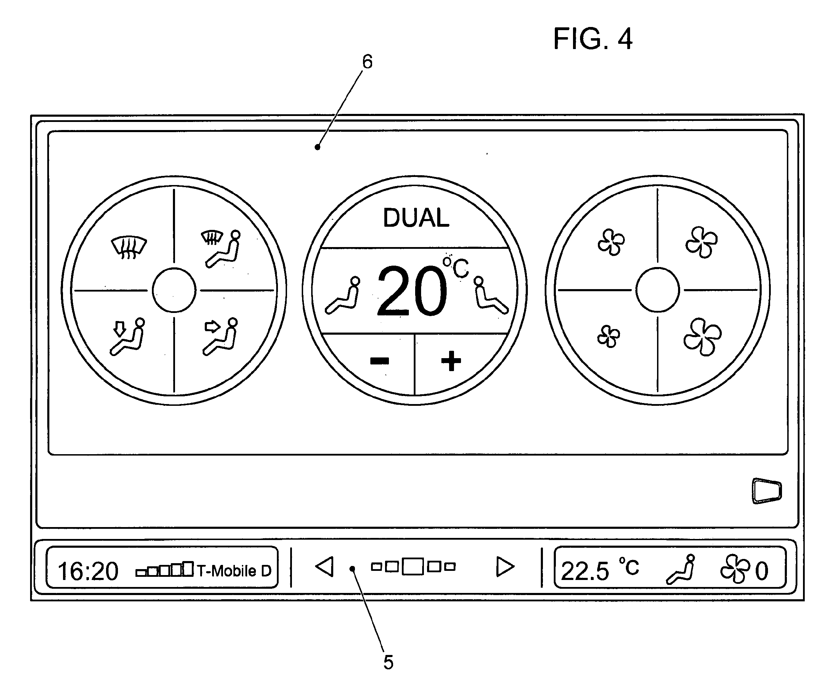

Schließlich kann der Nutzer von dem ersten Bedienzustand in den zweiten Bedienzustand wechseln. Dieser Wechsel kann durch eine Betätigung der Eingabeeinrichtung 4 ausgelöst werden. Wie aus Figur 3 ersichtlich, werden die Informationen des ersten Bedienzustands auf einem flächigen graphischen Objekt, nämlich einem Fenster dargestellt, welcher den Teilbereich 6 des Displays 1 einnimmt. Beim Wechsel von dem ersten Bedienzustand in den zweiten Bedienzustand wird eine Drehung dieses grafischen Objekts perspektivisch dargestellt, so dass nach der Drehung die virtuelle Rückseite des graphischen Objekts dargestellt wird. Diese Rückseite enthält die Informationen, welche zu dem zweiten Bedienzustand gehören. Sie umfassen ein Menü mit den Grundeinstellungen (Setup-Menü) für die Klimaanlage wie es in Figur 4 dargestellt ist.

Im Folgenden wird der Übergang von den in Figur 3 dargestellten ersten Bedienzustand in den in Figur 4 dargestellten zweiten Bedienzustand im Detail erläutert:

Die Drehung des grafischen Objekts wird in zwei Phasen unterteilt. Bei der ersten Phase wird das Objekt in eine Neutralstellung gedreht, bei welcher nur noch die seitliche Stirnfläche des grafischen Objekts sichtbar ist. In einer zweiten Phase wird das grafische Objekt weiter bis zu einem Drehwinkel von 180° gedreht. Während der Drehung wird weiterhin die jeweils sichtbare Seite des grafischen Objekts auf der jeweiligen Fläche perspektivisch dargestellt. Die perspektivische Darstellung der Drehung kann entweder so erfolgen, dass der Betrachter direkt auf das grafische Objekt schaut, d. h. die Betrachtungsstrecke parallel zur virtuellen Normalen des grafischen Objekts verläuft. Ferner kann die perspektivische Darstellung so erfolgen, dass der Betrachter das grafische Objekt virtuell von schräg oben betrachtet. Im Folgenden wird angenommen, dass der Betrachter senkrecht auf die Flächen des grafischen Objekts schaut, so dass die perspektivische Darstellung des grafischen Objekts in der ersten Phase zu einer kleiner werdenden Fläche des grafischen Objekts führt, und in der zweiten Phase zu einer größer werdenden Fläche des grafischen Objekts.

Die Drehung des grafischen Objekts wird durch aufeinander folgende Zwischenbilder dargestellt, die aufeinander folgende Positionen der Bildpunkte des grafischen Objekts anzeigen. Bei der Berechnung der Grafikdaten für diese Positionen x werden in der ersten Phase folgende Rechenschritte durchgeführt:

$$(i) \qquad n = \frac{t - t_0}{d_1} \quad ;$$

$$(ii) \qquad x = b_1 + c_1 \cdot n^4 \quad ,$$

wobei

t eine Systemzeit ist, zu der die erzeugten Grafikdaten auf dem Display 1 dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts 6 ist,
$c_1$ die gesamte Verschiebung des Bildpunkts des grafischen Objekts 6 in der ersten Phase ist und wobei die Schritte (i) und (ii) so oft wiederholt werden, bis $t > (t_0 + d_1)$.

Für die zweite Phase werden folgende Rechenschritte durchgeführt:

$$(i) \qquad n = \frac{t - t_0}{d_1} - 1 \quad ;$$

$$(ii) \qquad x = b_2 + c_2 \cdot (1 - n^4) \quad ,$$

wobei

t eine Systemzeit ist, zu der die erzeugten Grafikdaten auf dem Display 1 dargestellt werden, wobei zu Beginn der Drehung der zweiten Phase $t = t_0$ ist,

$d_2$ die Dauer der zweiten Phase ist,

$b_2$ die Ausgangsposition des Bildpunkts des grafischen Objekts 6 ist,

$C_2$ die Gesamtverschiebung des Bildpunkts des grafischen Objekts 6 in der zweiten Phase ist und

wobei die Schritte (i) und (ii) so oft wiederholt werden, bis gilt: $t > (t_0 + d_2)$.

Die Rechenschritte werden von der Recheneinheit 3 der Benutzerschnittstelleneinrichtung 2 ausgeführt, wobei der Recheneinheit 3 von der Systemuhr 8 die Systemzeit t übertragen wird.

Die Dauer $d_1$ der Drehung der ersten Phase ist in einem Bereich von 0,25 Sekunden bis 1 Sekunde, insbesondere in einem Bereich von 0,5 Sekunden bis 0,75 Sekunden. Gleichermaßen ist die Dauer der Drehung der zweiten Phase in einem Bereich von 0,25 Sekunden bis 1 Sekunde, insbesondere in einem Bereich von 0,5 Sekunden bis 0,75 Sekunden.

Gemäß einer Weiterbildung des Ausführungsbeispiels werden in der Benutzerschnittstelleneinrichtung 2 und damit der Recheneinheit 3 über den Fahrzeugbus 7 die Daten des Geschwindigkeitsmessers des Kraftfahrzeugs übertragen. Diese Daten werden von der Recheneinheit 3 verwendet, um die Dauer der Drehung für die beiden Phasen zu ermitteln. Dabei ist die Dauer der Gesamtdrehung umso länger, je höher die Geschwindigkeit des Kraftfahrzeugs ist.

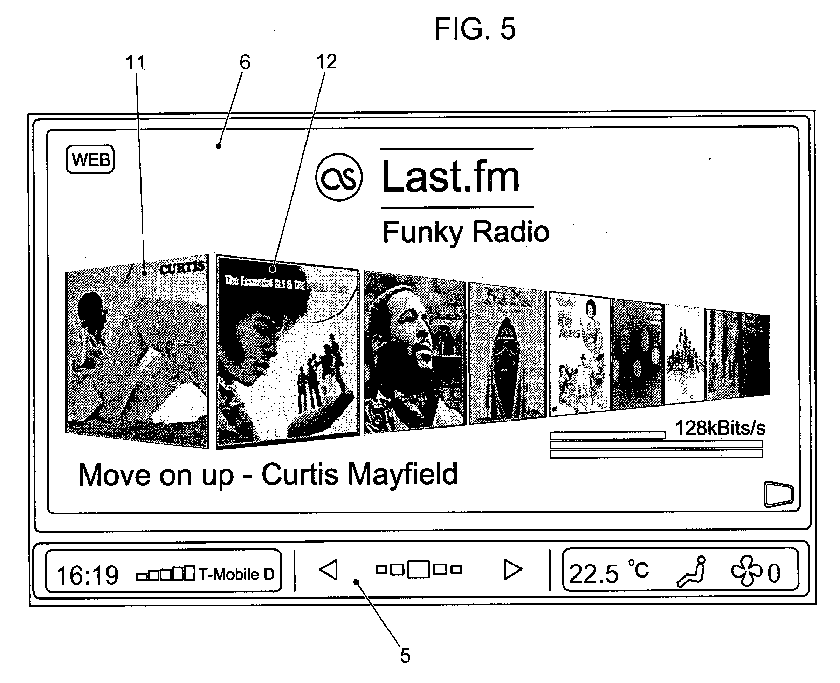

Mit Bezug zu den Figuren 5 bis 7 wird die Ansicht des Displays 1 erläutert, welche den Anzeigezustand, den ersten Bedienzustand und den zweiten Bedienzustand einer Audioeinrichtung des Kraftfahrzeugs zeigt.

Bei dem in Figur 5 gezeigten Anzeigezustand wird in dem Teilbereich 6 des Displays 1 ein Quader dreidimensional perspektivisch dargestellt, Auf der Stirnseite 11 des Quaders wird die aktuelle Wiedergabe der Audioeinrichtung z. B. an Hand eines CD-Covers visualisiert. Auf der Seitenfläche 12 des perspektivisch dargestellten Quaders werden weitere Auswahlmöglichkeiten für die Audioeinrichtung auch an Hand von CD-Covers visualisiert. Des Weiteren werden Informationen angezeigt, welche die Audiowiedergabe betreffen wie z. B. den Titel und den Interpreten des aktuellen Songs.

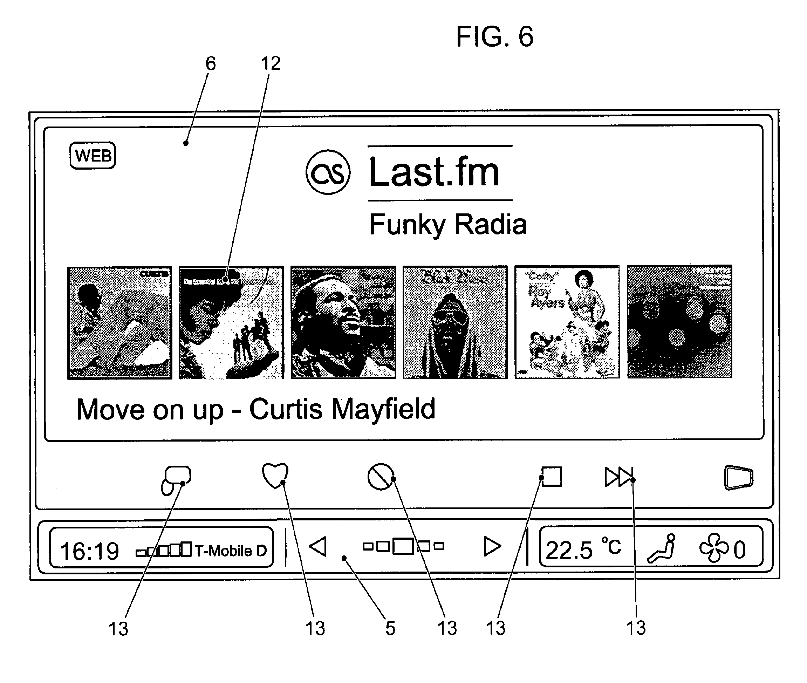

Nähert sich der Nutzer mit einem Objekt, wie z. B. seinem Finger, der Eingabeeinrichtung 4 an, wird dies von dem Annäherungssensor 9 detektiert, und die Benutzerschnittstelleneinrichtung 2 wechselt in den ersten Bedienzustand, der in Figur 6 gezeigt ist. Dabei wird der in Figur 5 gezeigte dreidimensional dargestellte Quader so gedreht, dass nur noch die Seitenfläche 12 zweidimensional sichtbar ist. Ferner werden Schaltflächen 13 angezeigt, welche der Steuerung der Audioeinrichtung dienen. Der Nutzer kann somit an Hand der Perspektive schnell und intuitiv erfassen, ob er sich bei der Audioeinrichtung im Anzeigezustand oder im ersten Bedienzustand befindet.

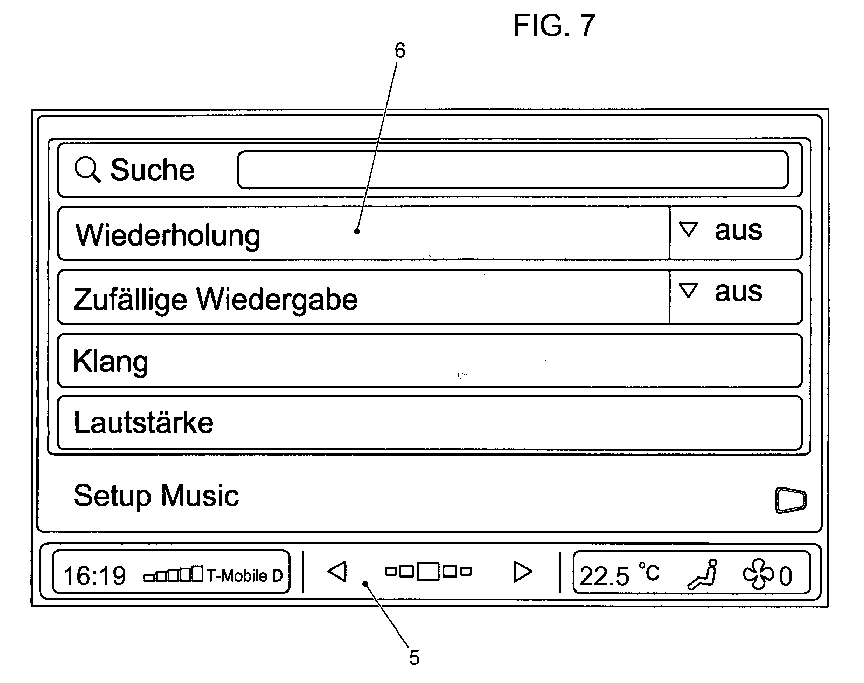

Durch eine weitere Eingabe mittels der Eingabeeinrichtung 4 kann der Nutzer schließlich in den zweiten Bedienzustand wechseln, der in Figur 7 angezeigt ist. In diesem zweiten Bedienzustand wird ein Einstellungsmenü für die Audiowiedergabe dargestellt. Beim Übergang vom ersten zum zweiten Bedienzustand, wie er in den Figuren 6 und 7 gezeigt ist, dreht sich wie vorstehend beschrieben das grafische Objekt von einer Seite zur anderen Seite.

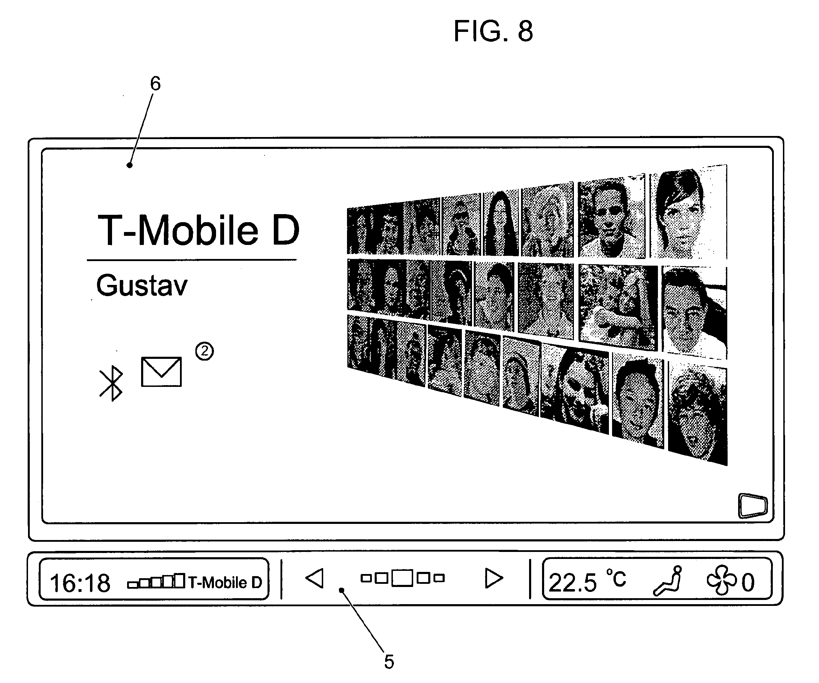

Schließlich wird mit Bezug zu den Figuren 8 bis 10 die Ansicht des Displays 1 im Anzeigezustand, im ersten Bedienzustand und im zweiten Bedienzustand für die Telekommunikationseinrichtung des Kraftfahrzeugs dargestellt. In dem in Figur 8 gezeigten Anzeigezustand werden die Kontakte auf einer dreidimensional perspektivisch angezeigten Fläche an Hand von einer Vielzahl von Fotos dargestellt. Ferner werden weitere Informationen zum Telekommunikationsnetz und gegebenenfalls zu der aktuellen Telekommunikationsverbindung zu einem Kontakt angezeigt.

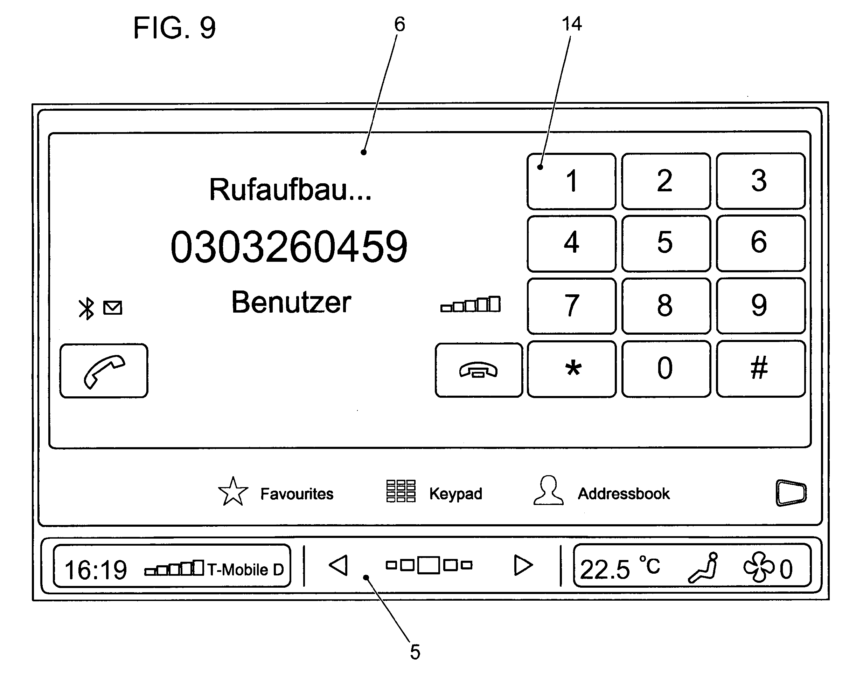

Bei dem in Figur 9 gezeigten ersten Bedienzustand kann ein Kontakt ausgewählt werden und eine Telekommunikationsverbindung aufgebaut werden. Hierfür wird unter anderem ein Tastenfeld 14 dargestellt.

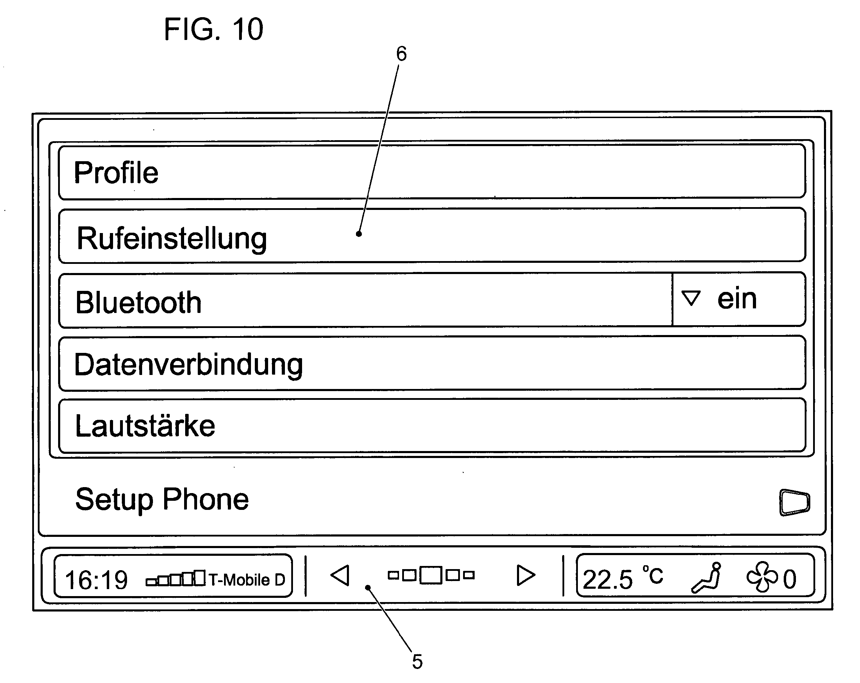

Wechselt der Nutzer von dem in Figur 9 gezeigten ersten Bedienzustand in den in Figur 10 gezeigten zweiten Bedienzustand mittels einer Betätigung der Eingabeeinrichtung 4, dreht sich auch bei dieser Darstellung das grafische Objekt wie vorstehend beschrieben von der einen Seite zur anderen Seite und es wird im zweiten Bedienzustand mit den Grundeinstellungen für die Telekommunikationseinrichtung dargestellt.

## BEZUGSZEICHENLISTE

1 Display
2 Benutzerschnittstelleneinrichtung
3 Recheneinheit
4 Eingabeeinrichtung
5 separater Bereich des Displays 1

| 6 | Bereich des Displays 1 zur Darstellung des Bedien- und Anzeigezustands |
|---|---|
| 7 | Fahrzeugbus |
| 8 | Systemuhr |
| 9 | Annäherungssensor |
| 10 | Schaltfläche |
| 11 | Stirnfläche eines Quaders |
| 12 | Seitenfläche eines Quaders |
| 13 | Schaltflächen |
| 14 | Tastenfeld |

## Patentansprüche

**1.** Verfahren zum Anzeigen von Informationen mittels eines in einem Kraftfahrzeug befestigten Displays (1), bei dem von einer Benutzerschnittstelleneinrichtung (2) Grafikdaten erzeugt werden, die zumindest einen Teilbereich (6) des Displays (1) so ansteuern, dass

- in einem Bedienzustand Informationen dargestellt werden, die zumindest einem mittels einer Eingabeeinrichtung (4) ausführbaren Bedienschritt zugeordnet sind und
- eine Annäherung eines Objekts an die Eingabeeinrichtung (4) detektiert wird,
**dadurch gekennzeichnet, dass**
- von der Benutzerschnittstelleneinrichtung (2) ferner Grafikdaten erzeugt werden, die zumindest einen Teilbereich (6) des Displays (1) so ansteuern, dass in einem Anzeigezustand Informationen dargestellt werden, die keinen Bedienschritten zugeordnet sind, und
- bei einer Annäherung eines Objekts an die Eingabeeinrichtung (4) die Benutzerschnittstelleneinrichtung (2) von dem Anzeigezustand in den Bedienzustand wechselt, wobei der Bedienzustand die Bedienung einer Anwendung betrifft, deren Anzeige im Anzeigezustand dargestellt wurde.

**2.** Verfahren nach Anspruch 1,
**dadurch gekennzeichnet,**
**dass** im Bedienzustand Schaltflächen (10, 13, 14) dargestellt werden, die einem mittels der Eingabeeinrichtung (4) ausführbaren Bedienschritt zugeordnet sind.

**3.** Verfahren nach Anspruch 1 oder 2,
**dadurch gekennzeichnet,**
**dass** im Anzeigezustand keine Schaltflächen dargestellt werden, die einem mittels der Eingabeeinrichtung (4) ausführbaren Bedienschritt zugeordnet sind.

**4.** Verfahren nach einem der vorstehenden Ansprüche,
**dadurch gekennzeichnet,**
**dass** die Informationen im Bedienzustand auswählbare Listeneinträge umfassen und dass nach der Auswahl eines Listeneintrags diese Informationen im Anzeigezustand dreidimensional dargestellt werden.

**5.** Verfahren nach Anspruch 4,
**dadurch gekennzeichnet,**
**dass** die Informationen im Anzeigezustand auf den Flächen (11, 12) eines dreidimensional dargestellten geometrischen Körpers dargestellt werden.

**6.** Verfahren nach Anspruch 5,
**dadurch gekennzeichnet,**
**dass** im Anzeigezustand der ausgewählte Listeneintrag auf der Stirnfläche (11) des geometrischen Körpers und die übrigen Listeneinträge auf einer Seitenfläche (12) des geometrischen Körpers dargestellt werden.

**7.** Verfahren nach einem der vorstehenden Ansprüche,
**dadurch gekennzeichnet,**
**dass** der Bedienzustand in einen ersten Bedienzustand und einen zweiten Bedienzustand unterteilt ist, wobei bei der Annäherung eines Objekts an die Eingabeeinrichtung (4) die Benutzerschnittstelleneinrichtung (2) von dem Anzeigezustand in den ersten Bedienzustand wechselt.

8. Verfahren nach Anspruch 7,
**dadurch gekennzeichnet,**
**dass** im ersten Bedienzustand Informationen dargestellt werden, die Bedienschritten zugeordnet sind, welche die Bedienung der laufenden Anwendung betreffen, deren Anzeige im vorherigen Anzeigezustand dargestellt wurde.

9. Verfahren nach Anspruch 7 oder 8 ,
**dadurch gekennzeichnet,**
**dass** im zweiten Bedienzustand Informationen dargestellt werden, die Basiseinstellungen betreffen, welche die laufende Anwendung betreffen, deren Anzeige im vorherigen Bedienzustand dargestellt wurde.

10. Verfahren nach einem der Ansprüche 7 bis 9,
**dadurch gekennzeichnet,**
**dass** von der Benutzerschnittstelleneinrichtung (2) Grafikdaten erzeugt werden, die das Display (1) so ansteuern, dass die Informationen des Anzeigezustands auf einem Anzeigefeld auf einer Seite eines flächigen grafischen Objekts und die Informationen des zweiten Bedienzustands auf einem Bedienfeld auf der anderen Seite des flächigen grafischen Objekts dargestellt werden.

11. Verfahren nach Anspruch 10,
**dadurch gekennzeichnet,**
**dass** auf eine Eingabe mittels der Eingabeeinrichtung (4) eine Recheneinheit (3) der Benutzerschnittstelleneinrichtung (2) die Grafikdaten so verändert, dass sich das flächige grafische Objekt bei der perspektivischen Darstellung auf dem Display (1) von einer Seite zu der anderen Seite dreht.

12. Verfahren nach Anspruch 11,
**dadurch gekennzeichnet,**
**dass** die Recheneinheit (3) der Benutzerschnittstelleneinrichtung (2) Grafikdaten für aufeinander folgende Zwischenbilder zur Darstellung der Drehung erzeugt, wobei die Drehung in eine erste Phase, bei der Bildpunkte des grafischen Objekts beschleunigt bewegt werden, und eine zweite Phase, bei der Bildpunkte des grafischen Objekts abgebremst bewegt werden, unterteilt wird.

13. Verfahren nach Anspruch 12,
**dadurch gekennzeichnet,**
**dass** bei der Berechnung der Grafikdaten für aufeinander folgende Zwischenbilder zur Darstellung der Drehung die aufeinander folgenden Positionen x der Bildpunkte des Objekts in der ersten Phase folgende Rechenschritte durchgeführt werden:

$$(i) \qquad n = \frac{t - t_0}{d_1} \qquad ;$$

$$(ii) \qquad x = b_1 + c_1 \cdot n^4 \qquad ,$$

wobei

t eine Systemzeit ist, zu der die erzeugten Grafikdaten auf dem Display (1) dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts (6) ist,
$c_1$ die gesamte Verschiebung des Bildpunkts des grafischen Objekts (6) in der ersten Phase ist und wobei die Schritte (i) und (ii) so oft wiederholt werden, bis gilt: $t > (t_0 + d_1)$.

14. Verfahren nach Anspruch 12 oder 13,
**dadurch gekennzeichnet,**

**dass** bei der Berechnung der Grafikdaten für aufeinander folgende Zwischenbilder zur Darstellung der Drehung, die aufeinander folgenden Positionen x der Bildpunkte des Objekts, in der zweiten Phase folgende Rechenschritte durchgeführt werden:

$$\text{(i)} \qquad n = \frac{t - t_0}{d_1} - 1 \quad ;$$

$$\text{(ii)} \qquad x = b_2 + c_2 \cdot (1 - n^4) \quad ,$$

wobei

t eine Systemzeit ist, zu der die erzeugten Grafikdaten auf dem Display (1) dargestellt werden, wobei zu Beginn der Drehung der zweiten Phase $t = t_0$ ist,
$d_2$ die Dauer der zweiten Phase ist,
$b_2$ die Ausgangsposition des Bildpunkts des grafischen Objekts (6) ist,
$c_2$ die Gesamtverschiebung des Bildpunkts des grafischen Objekts (6) in der zweiten Phase ist und
wobei die Schritte (i) und (ii) von der Recheneinheit so oft wiederholt werden, bis gilt: $t > (t_0 + d_2)$.

**15.** Verfahren nach einem der Ansprüche 12 bis 14,
**dadurch gekennzeichnet,**
**dass** die Dauer der Drehung der ersten und/oder zweiten Phase in einem Bereich von 0,25 Sekunden bis 1 Sekunde ist.

**16.** Anzeigeeinrichtung für ein Kraftfahrzeug mit

- einem in dem Kraftfahrzeug befestigten Display (1),
- einer Eingabeeinrichtung (4),
- einem Annäherungssensor (9), mit dem eine Annäherung eines Objekts an die Eingabeeinrichtung (4) detektierbar ist, und
- einer Benutzerschnittstelleneinrichtung (2), mit welcher Grafikdaten erzeugbar sind, die zumindest einen Teilbereich (6) des Displays (1) so ansteuern, dass in einem Bedienzustand Informationen dargestellt werden, die einem mittels einer Eingabeeinrichtung (4) ausführbaren Bedienschritt zugeordnet sind,
**dadurch gekennzeichnet, dass**
- mit der Benutzerschnittstelleneinrichtung (2) Grafikdaten erzeugt werden, die zumindest einen Teilbereich (6) des Displays (1) so ansteuern, dass in einem Anzeigezustand Informationen dargestellt werden, die keinen Bedienschritten zugeordnet sind, und
- die Benutzerschnittstelleneinrichtung (2) so ausgebildet ist, dass bei einer Annäherung eines Objekts an die Eingabeeinrichtung (4) die Grafikdaten von dem Anzeigezustand in den Bedienzustand wechseln, wobei der Bedienzustand die Bedienung einer Anwendung betrifft, deren Anzeige im Anzeigezustand dargestellt wurde.

**17.** Anzeigeeinrichtung nach Anspruch 16,
**dadurch gekennzeichnet,**
**dass** der Bedienzustand in einen ersten Bedienzustand und einen zweiten Bedienzustand unterteilt ist, wobei bei der Annäherung eines Objekts an die Eingabeeinrichtung (4) die Benutzerschnittstelleneinrichtung (2) von dem Anzeigezustand in den ersten Bedienzustand wechselt.

**18.** Anzeigeeinrichtung nach Anspruch 17,
**dadurch gekennzeichnet,**
**dass** von der Benutzerschnittstelleneinrichtung (2) Grafikdaten erzeugbar sind, die das Display (1) so ansteuern, dass die Informationen des Anzeigezustands auf einem Anzeigefeld auf einer Seite eines flächigen grafischen Objekts und die Informationen des zweiten Bedienzustands auf einem Bedienfeld auf der anderen Seite des flächigen grafischen Objekts dargestellt werden.

**19.** Anzeigeeinrichtung nach Anspruch 18,
**dadurch gekennzeichnet,**
**dass** die Benutzerschnittstelleneinrichtung (2) eine Recheneinheit (3) umfasst, mit welcher in Abhängigkeit von einer Eingabe mittels der Eingabeeinrichtung (4) die Grafikdaten so veränderbar sind, dass sich das flächige grafische Objekt bei der perspektivischen Darstellung auf dem Display (1) von einer Seite zu der anderen Seite dreht.

**Claims**

**1.** Method for displaying information by means of a display (1) mounted in a motor vehicle, in which method graphic data are generated by a user interface device (2) and actuate at least a part (6) of the display (1) in such a way that

- information which is assigned to at least one operator control step which can be executed by means of an input device (4) is displayed in an operating state, and
- an approach of an object to the input device (4) is detected,
**characterized in that**
- graphic data, which actuate at least a part (6) of the display (1) in such a way that information which is not assigned to any operator control steps is displayed in a display state, are also generated by the user interface device (2), and
- when an object approaches the input device (4) the user interface device (2) changes from the display state into the operator control state, wherein the operator control state relates to the operator control of an application whose display has been displayed in the display state.

**2.** Method according to Claim 1,
**characterized**
**in that** control buttons (10, 13, 14) which are assigned to an operator control step which can be executed by means of the input device (4) are displayed in the operator control state.

**3.** Method according to Claim 1 or 2,
**characterized**
**in that** no control buttons which are assigned to an operator control step which can be executed by means of the input device (4) are displayed in the display state.

**4.** Method according to one of the preceding claims,
**characterized**
**in that** the information in the operator control state comprises selectable list entries, and in that after the selection of a list entry this information is displayed in a three-dimensional fashion in the display state.

**5.** Method according to Claim 4,
**characterized**
**in that** the information in the display state is displayed on the faces (11, 12) of a geometric body which is displayed in a three-dimensional fashion.

**6.** Method according to Claim 5,
**characterized**
**in that** in the display state the selected list entry is displayed on the end face (11) of the geometric body, and the other list entries are displayed on a side face (12) of the geometric body.

**7.** Method according to one of the preceding claims,
**characterized**
**in that** the operator control state is divided into a first operator control state and a second operator control state, wherein when an object approaches the input device (4) the user interface device (2) changes from the display state into the first operator control state.

**8.** Method according to Claim 7,
**characterized**
**in that** in the first operator control state information is displayed which is assigned to operator control steps which relate to the operator control of the running application whose display has been displayed in the previous display state.

**9.** Method according to Claim 7 or 8,
**characterized**
**in that** in the second operator control state information is displayed which relates to the basic setting which relates to the running application whose display has been displayed in the previous operator control state.

**10.** Method according to one of Claims 7 to 9,
**characterized**
**in that** graphic data, which actuate the display (1) in such a way that the information of the display state is displayed on a display field on one side of a planar graphic object and the information of the second operator control state is displayed on an operator control field on the other side of the planar graphic object, are generated by the user interface device (2).

**11.** Method according to Claim 10,
**characterized**
**in that** in response to an input by means of the input device (4) a computing unit (3) of the user interface device (2) changes the graphic data in such a way that the planar graphic object rotates from one side to the other side during the perspective representation on the display (1).

**12.** Method according to Claim 11,
**characterized**
**in that** the computing unit (3) of the user interface device (2) generates graphic data for successive intermediate images for the representation of the rotation, when the rotation is divided into a first phase, during which pixels of the graphic object are moved in an accelerated fashion, and a second phase during which pixels of the graphic object are moved in a braked fashion.

**13.** Method according to Claim 12,
**characterized**
**in that** during the calculation of the graphic data for successive intermediate images for representing the rotation - the successive positions x of the pixels of the object, the following computing steps are carried out in the first phase:

$$(\mathrm{i}) \quad n = \frac{t - t_0}{d_1} \, ;$$

$$(\mathrm{ii}) \quad x = b_1 + c_1 \cdot n^4 \, ,$$

where

t is a system time at which the generated graphic data are displayed on the display (1), wherein $t = t_0$ at the start of the rotation of the first phase,
$d_1$ is the duration of the first phase,
$b_1$ is the starting position of the pixel of the graphic object (6),
$c_1$ is the entire displacement of the pixel of the graphic object (6) in the first phase, and wherein the steps (i) and (ii) are repeated until the following applies:

$$t > (t_0 + d_1).$$

**14.** Method according to Claim 12 or 13,
**characterized**
**in that** during the calculation of the graphic data for successive intermediate images for representing the rotation - the successive positions x of the pixels of the object, the following computing steps are carried out in the second phase:

$$(\text{i}) \quad n = \frac{t - t_0}{d_1} - 1;$$

$$(\text{ii}) \quad x = b_2 + c_2 \cdot (1 - n^4),$$

where

t is a system time at which the generated graphic data are displayed on the display (1), wherein $t = t_0$ at the start of the rotation of the second phase,

$d_2$ is the duration of the second phase,

$b_2$ is the starting position of the pixel of the graphic object (6),

$c_2$ is the entire displacement of the pixel of the graphic object (6) in the first phase, and wherein the steps (i) and (ii) are repeated by the computing unit until the following applies:

$t > (t_0 + d_2)$.

**15.** Method according to one of Claims 12 to 14,
**characterized**
**in that** the duration of the rotation of the first and/or second phase is in a range from 0.25 seconds to 1 second.

**16.** Display device for motor vehicle having

- a display (1) which is mounted in the motor vehicle,
- an input device (4),
- an approach sensor (9) for which an approach of an object to the input device (4) can be detected, and
- a user interface device (2) with which graphic data, which actuate at least a part (6) of the display (1) in such a way that information which is assigned to an operator control step which can be executed by means of an input device (4) is displayed in an operator control state can be generated,
**characterized in that**
- graphic data, which actuates at least a part (6) of the display (1) in such a way that information which is not assigned to any operator control steps is displayed in a display state, are generated with the user interface device (2), and
- the user interface device (2) is embodied in such a way that when an object approaches the input device (4) the graphic data change from the display state to the operator control state, wherein the operator control state relates to the operator control of an application whose display has been displayed in the display state.

**17.** Display device according to Claim 16,
**characterized**
**in that** the operator control state is divided into a first operator control state and a second operator control state, wherein when an object approaches the input device (4) the user interface device (2) changes from the display state into the first operator control state.

**18.** Display device according to Claim 17,
**characterized**
**in that** graphic data, which actuate the display (1) in such a way that the information of the display state is displayed on a display field on one side of a planar graphic object and the information of the second operator control state is displayed on an operator control field on the other side of the planar graphic object, can be generated by the user interface device (2).

**19.** Display device according to Claim 18,
**characterized**
**in that** the user interface device (2) comprises a computing unit (3) with which the graphic data can be changed as a function of an input by means of the input device (4) in such a way that the planar graphic object rotates from one side to the other during the perspective representation on the display (1).

**Revendications**

1. Procédé pour afficher des informations au moyen d'un afficheur (1) fixé dans un véhicule automobile, selon lequel des données graphiques sont générées par un dispositif d'interface utilisateur (2), lesquelles commandent au moins une zone partielle (6) de l'afficheur (1) de telle sorte que

   - dans un état d'utilisation, des informations sont représentées qui sont associées à au moins une étape d'utilisation pouvant être exécutée au moyen d'un dispositif de saisie (4) et
   - une approche d'un objet du dispositif de saisie (4) est détectée,
   **caractérisé en ce que**
   - des données graphiques supplémentaires sont générées par le dispositif d'interface utilisateur (2), lesquelles commandent au moins une zone partielle (6) de l'afficheur (1) de telle sorte que dans un état d'affichage, des informations sont représentées qui ne sont pas associées à des étapes d'utilisation et
   - lors d'une approche d'un objet du dispositif de saisie (4), le dispositif d'interface utilisateur (2) bascule de l'état d'affichage à l'état d'utilisation, l'état d'utilisation concernant l'utilisation d'une application dont les éléments d'affichage ont été représentés dans l'état d'affichage.

2. Procédé selon la revendication 1, **caractérisé en ce que** dans l'état d'utilisation, des boutons (10, 13, 14) sont représentés, lesquels sont associés à une étape d'utilisation pouvant être exécutée au moyen du dispositif de saisie (4).

3. Procédé selon la revendication 1 ou 2, **caractérisé en ce que** dans l'état d'affichage, aucun bouton associé à une étape d'utilisation pouvant être exécutée au moyen du dispositif de saisie (4) n'est représenté.

4. Procédé selon l'une des revendications précédentes, **caractérisé en ce que** les informations dans l'état d'utilisation comprennent des éléments de liste sélectionnables et qu'après la sélection d'un élément de liste, ces informations sont représentées en trois dimensions dans l'état d'affichage.

5. Procédé selon la revendication 4, **caractérisé en ce que** les informations dans l'état d'affichage sont représentées sur les surfaces (11, 12) d'un corps géométrique représenté en trois dimensions.

6. Procédé selon la revendication 5, **caractérisé en ce que** dans l'état d'affichage, l'élément de liste sélectionné est représenté sur la face frontale (11) du corps géométrique et les autres éléments de liste sont représentés sur une face latérale (12) du corps géométrique.

7. Procédé selon l'une des revendications précédentes, **caractérisé en ce que** l'état d'utilisation est divisé en un premier état d'utilisation et un deuxième état d'utilisation, le dispositif d'interface utilisateur (2) basculant de l'état d'affichage au premier état d'utilisation lors de l'approche d'un objet du dispositif de saisie (4).

8. Procédé selon la revendication 7, **caractérisé en ce que** dans le premier état d'utilisation sont affichées des informations qui sont associées à des étapes d'utilisation qui concernent l'utilisation de l'application courante dont les éléments d'affichage ont été représentés dans l'état d'affichage précédent.

9. Procédé selon la revendication 7 ou 8, **caractérisé en ce que** dans le deuxième état d'utilisation sont affichées des informations qui concernent des réglages de base qui concernent l'application courante dont les éléments d'affichage ont été représentés dans l'état d'affichage précédent.

10. Procédé selon l'une des revendications 7 à 9, **caractérisé en ce que** des données graphiques sont générées par le dispositif d'interface utilisateur (2), lesquelles commandent l'afficheur (1) de telle sorte que les informations de l'état d'affichage sont représentées sur un champ d'affichage sur un côté d'un objet graphique plan et les informations du deuxième état d'utilisation sur un champ d'utilisation de l'autre côté de l'objet graphique plan.

11. Procédé selon la revendication 10, **caractérisé en ce que** sur une saisie au moyen du dispositif de saisie (4), une unité de calcul (3) du dispositif d'interface utilisateur (2) modifie les données graphiques de telle sorte que l'objet graphique plan pivote d'un côté à l'autre lors de la représentation en perspective sur l'afficheur (1).

**12.** Procédé selon la revendication 11, **caractérisé en ce que** l'unité de calcul (3) du dispositif d'interface utilisateur (2) génère des données graphiques pour des images intermédiaires successives en vue de représenter la rotation, la rotation étant divisée en une première phase, au cours de laquelle les pixels de l'objet graphique sont déplacés en accéléré, et une deuxième phase, au cours de laquelle les pixels de l'objet graphique sont déplacés en étant freinés.

**13.** Procédé selon la revendication 12, **caractérisé en ce que** lors du calcul des données graphiques pour des images intermédiaires successives en vue de représenter la rotation - les positions x successives des pixels de l'objet, les étapes de calcul suivantes sont exécutées dans la première phase :

$$\text{(i)} \quad n = \frac{t - t_0}{d_1} \, ;$$

$$\text{(ii)} \quad x = b_1 + c_1 \cdot n^4,$$

avec

t désignant une heure système à laquelle les données graphiques générées sont représentées sur l'afficheur (1), t étant égal à $t_0$ au début de la rotation de la première phase,
$d_1$ désignant la durée de la première phase,
$b_1$ désignant la position initiale du pixel de l'objet graphique (6),
$c_1$ désignant le décalage total du pixel de l'objet graphique (6) dans la première phase et les étapes (i) et (ii) étant répétées aussi souvent que nécessaire jusqu'à ce que $t > (t_0 + d_1)$.

**14.** Procédé selon la revendication 12 ou 13, **caractérisé en ce que** lors du calcul des données graphiques pour des images intermédiaires successives en vue de représenter la rotation - les positions x successives des pixels de l'objet, les étapes de calcul suivantes sont exécutées dans la deuxième phase :

$$\text{(i)} \quad n = \frac{t - t_0}{d_2} - 1 \, ;$$

$$\text{(ii)} \quad x = b_2 + c_2 \cdot (1 - n^4),$$

avec

t désignant une heure système à laquelle les données graphiques générées sont représentées sur l'afficheur (1), t étant égal à $t_0$ au début de la rotation de la deuxième phase,
$d_2$ désignant la durée de la deuxième phase,
$b_2$ désignant la position initiale du pixel de l'objet graphique (6),
$c_2$ désignant le décalage total du pixel de l'objet graphique (6) dans la deuxième phase et
les étapes (i) et (ii) étant répétées par l'unité de calcul aussi souvent que nécessaire jusqu'à ce que $t > (t_0 + d_2)$.

**15.** Procédé selon l'une des revendications 12 à 14, **caractérisé en ce que** la durée de la rotation de la première et/ou de la deuxième phase est comprise dans une plage de 0,25 seconde à 1 seconde.

**16.** Dispositif d'affichage pour un véhicule automobile comprenant :

- un afficheur (1) fixé dans un véhicule automobile,
- un dispositif de saisie (4),
- un détecteur d'approche (9) qui permet de détecter une approche d'un objet du dispositif de saisie (4), et
- un dispositif d'interface utilisateur (2) qui permet de générer des données graphiques, lesquelles commandent au moins une zone partielle (6) de l'afficheur (1) de telle sorte que dans un état d'utilisation, des informations sont représentées qui sont associées à une étape d'utilisation pouvant être exécutée au moyen d'un dispositif de saisie (4), **caractérisé en ce que**

- des données graphiques sont générées par le dispositif d'interface utilisateur (2), lesquelles commandent au moins une zone partielle (6) de l'afficheur (1) de telle sorte que dans un état d'affichage, des informations sont représentées qui ne sont pas associées à des étapes d'utilisation et

- le dispositif d'interface utilisateur (2) est configuré de telle sorte que lors d'une approche d'un objet du dispositif de saisie (4), les données graphiques basculent de l'état d'affichage à l'état d'utilisation, l'état d'utilisation concernant l'utilisation d'une application dont les éléments d'affichage ont été représentés dans l'état d'affichage.

**17.** Dispositif d'affichage selon la revendication 16, **caractérisé en ce que** l'état d'utilisation est divisé en un premier état d'utilisation et un deuxième état d'utilisation, le dispositif d'interface utilisateur (2) basculant de l'état d'affichage au premier état d'utilisation lors de l'approche d'un objet du dispositif de saisie (4).

**18.** Dispositif d'affichage selon la revendication 17, **caractérisé en ce que** le dispositif d'interface utilisateur (2) peut générer des données graphiques qui commandent l'afficheur (1) de telle sorte que les informations de l'état d'affichage sont représentées sur un champ d'affichage d'un côté d'un objet graphique plan et les informations du deuxième état d'utilisation sur un champ d'utilisation de l'autre côté de l'objet graphique plan.

**19.** Dispositif d'affichage selon la revendication 18, **caractérisé en ce que** le dispositif d'interface utilisateur (2) comprend une unité de calcul (3) avec laquelle les données graphiques peuvent être modifiées en fonction d'une saisie au moyen du dispositif de saisie (4) de telle sorte que l'objet graphique plan pivote d'un côté à l'autre lors de la représentation en perspective sur l'afficheur (1).

FIG. 1

FIG. 2

16:20 ▫▫▫▫▫ T-Mobile D | ◁ ▫□▢□▫ ▷ | 22.5 °C ⮂ ❁0

# FIG. 3

EP 2 181 012 B1

FIG. 4

FIG. 5

WEB

Last.fm
Funky Radio

128kBits/s

Move on up – Curtis Mayfield

16:19    T-Mobile D    22.5 °C

12

6

11

5

## FIG. 6

WEB

⊙ Last.fm

Funky Radia

Move on up - Curtis Mayfield

16:19 ▱▱▱T-Mobile D  ◁ ▫▫▢▫▫ ▷  22.5 °C  🪑 ❁0

EP 2 181 012 B1

## FIG. 7

6

| 🔍 Suche | |
|---|---|
| Wiederholung | ▽ aus |
| Zufällige Wiedergabe | ▽ aus |
| Klang | |
| Lautstärke | |

Setup Music

16:19 ▫▫▫▫▫T-Mobile D   ◁  ▫▫□▫▫  ▷   22.5 °C  🪑 ✿0

5

EP 2 181 012 B1

FIG. 8

EP 2 181 012 B1

FIG. 9

## FIG. 10

| Profile |
| Rufeinstellung |
| Bluetooth | ▽ ein |
| Datenverbindung |
| Lautstärke |

Setup Phone

16:19  ▭▫▭▭▭ T-Mobile D  ◁  ▫▫▭▫▫  ▷  22.5 °C

EP 2 181 012 B1

**EP 2 181 012 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10001988 A1
- DE 10303792 A1
- DE 19941955 A1
- EP 1406160 A2
- US 20060265126 A1
- DE 10058244 C2
- DE 10305341 A1
- DE 102004048956 A1
- EP 1212208 B1